# EUROPÄISCHE PATENTSCHRIFT

(11) **EP 0 812 253 B1**
(45) Veröffentlichungstag und Bekanntmachung des Hinweises auf die Patenterteilung: **13.06.2001**
(21) Anmeldenummer: 96902206.0
(22) Anmeldetag: 27.02.1996
(51) Int. Cl.: B29C 45/27, B29C 45/16

(54) **BALANCIERTES MEHRFACH-HEISSKANAL-KOINJEKTIONS-WERKZEUG**
BALANCED MULTIPLE HOT RUNNER CO-INJECTION MOULD
MOULE EQUILIBRE DE CO-INJECTION A CANAUX CHAUFFANTS MULTIPLES

(30) Priorität: 27.02.1995 CH 54895
(43) Veröffentlichungstag der Anmeldung: 17.12.1997
(73) Patentinhaber: Otto Hofstetter AG, 8730 Uznach (CH)
(72) Erfinder: HOFSTETTER, Otto, CH-8730 Uznach (CH); FERNANDEZ, Luis, CH-8730 Uznach (CH)
(74) Vertreter: Ritscher, Thomas, Dr.
(86) Internationale Anmeldenummer: CH9600061
(87) Internationale Veröffentlichungsnummer: WO9626823

(56) Entgegenhaltungen:
- EP-A- 0 647 514
- DE-U- 8 709 724
- US-A- 4 588 367
- PLASTICS, August 1965, Seiten 47-51, XP002003238 J.D. ROBINSON: "Gating and cooling techniques for polypropylene"
- KUNSTSTOFFE, Bd. 76, Nr. 7, Juli 1986, MUNCHEN DE, Seiten 571-575, XP002003239 M. RITTO: "Auslegen und Konstruieren von Heisskanalwerkzeugen"

## Beschreibung

Die vorliegende Erfindung betrifft ein balanciertes Mehrfach-Heisskanal-Koinjektions-Werkzeug für eine Spritz-Blas-Maschine nach dem Oberbegriff des Anspruchs 1.

Solche Werkzeuge zum Spritzgiessen von mehrschichtigen Formlingen aus Kunststoffmaterialien und insbesondere PET-artigen Materialien sind seit längerem bekannt und finden ihre Verwendung im wesentlichen bei der Herstellung von Vorformlingen, wie sie die Getränkeindustrie für ihre sogenannten PET-Flaschen in grossen Mengen benötigt. An diese Formwerkzeuge werden aussergewöhnlich hohe Anforderungen gestellt, da bei der Verarbeitung von PET, PEN und deren Copolymeren sowie von Nylon den materialspezifischen Besonderheiten besondere Aufmerksamkeit geschenkt werden muss. So erweist sich beispielsweise die Verarbeitungstemperatur dieser Kunststoffe als besonders kritisch. Diese reagieren ausserdem ausserordentlich empfindlich auf Druckschwankungen und Scherkräfte. Insbesondere beeinflussen solche und weitere Parameter die Gleichmässigkeit und Homogenität der Schichtdicke und die Dichteverteilung innerhalb der hergestellten Vorformlinge.

Bei der in der WO 91/16188 beschriebenen Spritzgiess-Vorrichtung wurde deshalb auf die Länge der Förderkanäle in besonderer Weise geachtet und wird eine gleichmässige Temperaturverteilung in dafür besonders vorgesehenen Verteilerblöcken erzielt. Leider lässt sich mit dieser Vorrichtung jedoch nicht vermeiden, dass sich die unterschiedlichen Formmassen miteinander vermischen, was insbesondere bei der Herstellung von Vorformlingen für die Lebensmittelindustrie zu unakzeptablen Materialschwankungen und Vermischungen führen kann. Insbesondere erweist sich die Verwendung von mehreren Verteilerblöcken für die Justierung und damit die Wartung des gesamten Werkzeugs als problematisch.

Hotrunner-Blöcke werden üblicherweise innerhalb des Werkzeugs, d.h. zwischen Kopfplatte und Hotrunner-Platte, derart fixiert, dass deren Förderkanäle sowohl extruderseitig als auch düsenseitig nahtlos miteinander fluchten und eine druckfeste Verbindung bilden.

Aus der DE-U-8709724 und der US-A-4588367 ist jeweils ein balanciertes Mehrfach-Heisskanal-Koinjektions-Werkzeug für eine Spritz-Blas-Maschine bekannt, welches Werkzeug eine Kopfplatte, eine Heissläuferplatte und einen Heissläufer-Block aufweist, sowie ein rohrförmiges Ansatzstück zum Verbinden des Heissläufer-Blocks mit einem Extruder, wobei der Heissläufer-Block zur spannungsfreien Wärmeausdehnung zwischen der Kopfplatte und der Heissläuferplatte mit Mitteln gleitend abgestützt ist und lediglich in seiner Mitte durch Zentriermittel festgehalten ist.

Durch die unterschiedliche thermische Ausdehnung des Heissläufer-Blocks einerseits und der Kopf- resp. Hotrunner-Platte andererseits entstehen im Werkzeug und besonders im Heissläufer-Block intrinsische Spannungen, die rasch zu Material-Ermüdungserscheinungen wie Haarrissen oder sogar Materialbrüchen führen können. Eine weitere mechanische Belastung des Heissläufer-Blocks entsteht durch die Schliesskraft des Extruders auf das durch die Kopfplatte ragende rohrförmige Ansatzstück. Durch die pulsartige Förderung der Kunststoffschmelze entstehen zusätzliche auf den Hotrunner-Block wirkende Druckbelastungen, die zusammen mit den oben erwähnten mechanischen Spannungen zu irreversiblen Schäden führen können.

Es ist deshalb Aufgabe der vorliegenden Erfindung, ein balanciertes Mehrfach-Heisskanal-Koinjektions-Werkzeug zu schaffen, dessen Hotrunner-Block im Betrieb keine thermisch verursachten Spannungen aufweist, dessen Hotrunner-Block durch den mechanischen Anpressdruck des Extruders nicht mechanisch belastet wird und dessen Hotrunner-Block durch die schockartigen Druckbelastungen beim Durchpressen der Schmelze keinen druckbedingten Verspannungen unterworfen ist. Es ist also Aufgabe der Erfindung, ein verschleissarmes Werkzeug mit einem spannungsfreien Hotrunner-Block zu schaffen.

Diese Aufgabe wird erfindungsgemäss mit einem Werkzeug gemäss Oberbegriff des Anspruchs 1 gelöst, wobei Mittel vorgesehen sind, um die Richtung der Wärmeausdehnung des Heissläufer-Blocks zu kontrollieren.

Insbesondere ist der Hotrunner-Block über Gleitelemente auf der Heisskanal-Platte im Randbereich abgestützt. Um dem Hotrunner-Block eine spannungsfreie Wärmeausdehnung zu erlauben, ist das rohrförmige Ansatzstück für den Extruder ebenfalls gleitend abgestützt. Die vom Anpressdruck des Extruders ausgeübte Kraft auf dieses Ansatzstück wird erfindungsgemäss von einer Angussbüchse aufgefangen. Diese Angussbüchse liegt mit ihrem äusseren Rand auf der Kopfplatte und überträgt damit diese Anpresskraft auf die Kopfplatte. Um die Ausdehnungsbewegung des Heissläufer-Blocks nicht zu behindern, ist auch diese Angussbüchse gleitend auf der Kopfplatte gelagert. Bei der vorliegenden Konstruktion ist insbesondere auch darauf zu achten, dass die Länge der einzelnen Förderkanäle gleich ist und die Kanäle möglichst symmetrisch angeordnet sind. Diese balancierte Förderkanalführung führt dazu, dass sich die beim Füllen der Kavitäten ergebenden schockartigen Druckveränderungen im wesentlichen gegenseitig aufheben.

Im folgenden soll die Erfindung anhand eines Ausführungsbeispiels und mit Hilfe der Figuren näher erläutert werden. Dabei zeigt:
Figur 1 einen Querschnitt durch einen schematischen Aufbau einer Spritzblasmaschine;
Figur 2 einen Querschnitt durch eine bevorzugte Ausführungsform eines erfindungsgemässen Heisskanal-Werkzeugs im Einspritzbereich;
Figur 3 einen Querschnitt durch die Mitte einer bevorzugten Ausführungsform eines erfindungsgemässen Heisskanal-Werkzeugs;
Figur 4 einen Längsschnitt durch eine bevorzugte Ausführungsform eines erfindungsgemässen Heisskanal-Werkzeugs.

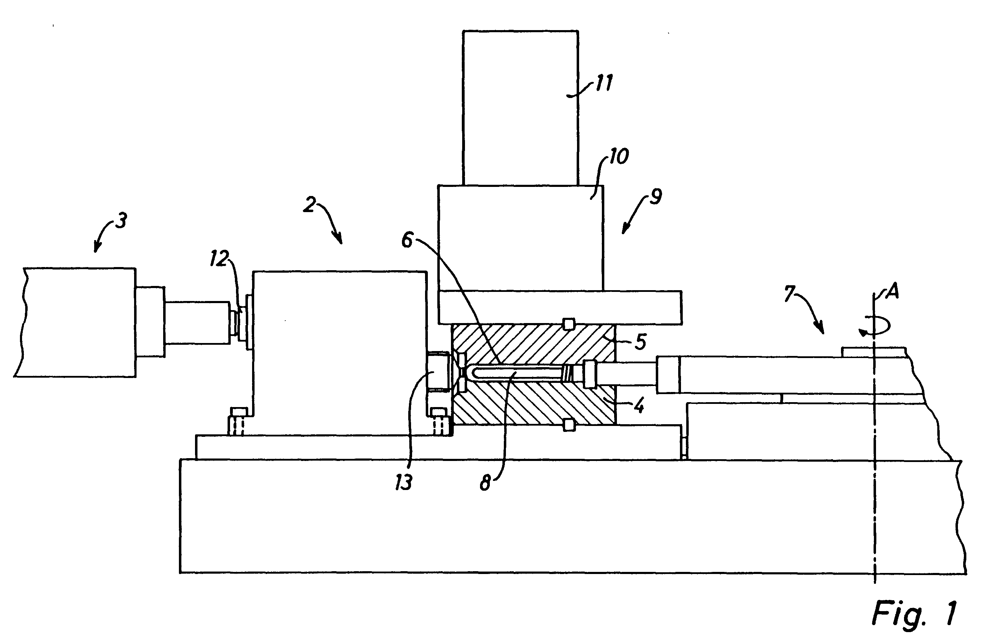

Figur 1 zeigt einen Querschnitt durch einen schematischen Aufbau einer Spritzblasmaschine mit einem erfindungsgemässen Heisskanal-Werkzeug 2, im folgenden auch Hotrunner-System oder kurz Werkzeug genannt, und einem dazugehörigen Extruder 3. Die Spritzblasmaschine besteht im wesentlichen aus einem drei- oder viereckigen Drehtisch 7, der üblicherweise an jeder seiner Flanken eine oder mehrere Formkerne 8 trägt und um eine Drehachse A drehbar ist. Derart können die in einer ersten Stellung umspritzten Formkerne 8 durch blosse Drehung in ein Blaswerkzeug (nicht dargestellt) gebracht werden und durch eine weitere Drehung zu einer Entnahmestation (nicht dargestellt) geführt werden. Unter Umständen, d.h. je nach verwendetem Material, ist zwischen der Spritzstation und dem Blaswerkzeug eine Temperierstation eingefügt. Der in Figur 1 dargestellte schematische Aufbau zeigt einen Querschnitt einer solchen Spritzblas maschine an der Spritzstation. Diese Spritzstation umfasst mindestens einen Extruder 3, ein Heisskanal-Werkzeug 2 und ein Formwerkzeug 9.

Das Formwerkzeug 9 besteht im wesentlichen aus einer unteren Formenplatte 4 und einer oberen Formenplatte 5, welche mindestens eine, vorzugsweise acht Kavitäten 6 für die Herstellung von Vorformlingen bilden. In jede dieser Kavitäten 6 ragt ein Formkern 8 des Drehtisches 7. Nach erfolgter Einspritzung des heissen Kunststoffes und Erstarrung desselben in den gekühlten Kavitäten 6 werden diese geöffnet, indem die obere Formplatte 5 mit Hilfe einer Maschinenplatte 10 entlang einer Säule 11 abgehoben wird. Mit einer kleinen Hubbewegung des Drehtisches 7 können die umspritzten Formkerne 8 aus der unteren Formenplatte 4 gehoben werden und in die Temperier- oder Blasstation gedreht werden. Mit dieser Drehung des Drehtisches 7 werden gleichzeitig die Formkerne 8 der zweiten Flanke über den Kavitäten 6 positioniert und vor dem Schliessen des Formwerkzeugs 9 in diese Kavitäten 6 abgesenkt.

Aufgabe des Heisskanal-Werkzeuges 2 ist es, den plastifizierten Kunststoff auf mehrere Kavitäten 6 gleichmässig zu verteilen. Diese gleichmässige Verteilung des Kunststoffes ist für die Herstellung gleichmässig gefüllter Formen von ausserordentlicher Bedeutung. Unterschiedlich dicht gefüllte Vorformlinge reissen beim Blasen, zeigen Verfärbungen oder Schlieren. Deshalb weist das erfindungsgemässe Heisskanal-Werkzeug 2 zwischen einer Angussbüchse 12 und den einzelnen Spritzgussdüsen 13 temperaturstabilisierte Förderkanäle gleicher Länge auf.

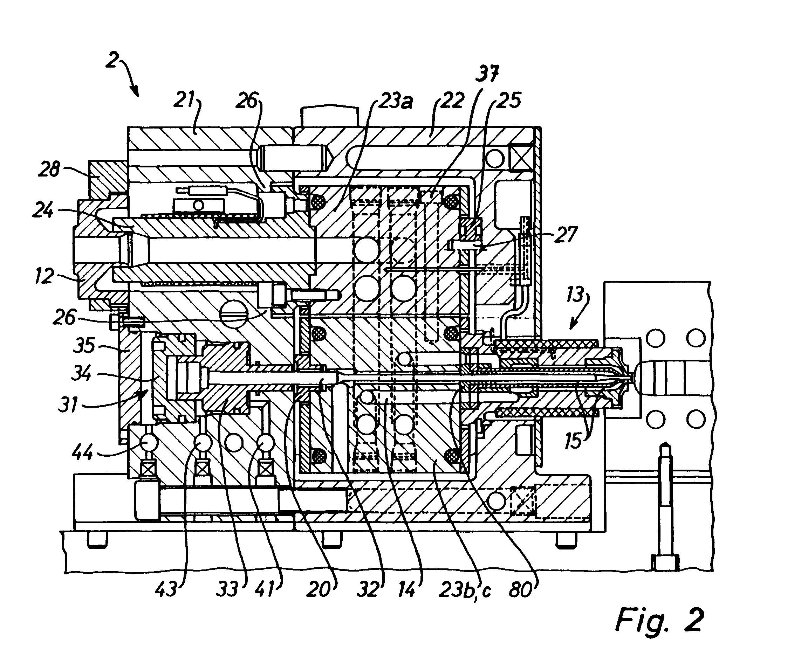

Figur 2 zeigt einen Querschnitt durch eine bevorzugte Ausführungsform eines erfingungsgemässen Heisskanalwerkzeugs 2. Dieses besteht im wesentlichen aus einer Kopfplatte 21, einer Hotrunnerplatte 22 und einem dreiteiligen Heissläufer-Block 23a, 23b, 23c. Der obere Teil 23a des Heissläufer-Blocks ist über ein beheizbares Rohrstück 24 mit der Angussbüchse 12 fest verbunden. Die unteren Teile 23b, 23c des Heissläufer-Blocks sind jeweils mittig, d.h. an den Übergangsstellen der Förderkanäle mit dem oberen Teil 23a des Heissläufer-Blocks verkeilt und mit einer Schraube 37 gesichert.

Erfindungsgemäss ist der obere Heissläufer-Blockteil 23a in der unteren Platte 22 über zwei Abstützringe 25 gleitend abgestützt, liegt die Angussbüchse 12 gleitend auf der Kopfplatte 21 und ist das mit der Angussbüchse 12 fest verbundene Rohrstück 24 über Schulterflächen 26 der Kopfplatte 21 gleitend eingespannt. Diese Konstruktion erlaubt dem Heissläufer-Block 23a-c, sich bei üblichen Betriebstemperaturen von beispielsweise 230°C gegenüber der kälteren Kopfplatte 21 und der Hotrunner-Platte 22 auszudehnen, ohne die gefürchteten thermisch verursachten Spannungen zu erzeugen. Insbesondere werden mit dieser Konstruktion die durch den Anpressdruck des Extruders erzeugten Kräfte von üblicherweise ca. 9 Tonnen nicht auf den Heissläufer-Block 23a-c übertragen, sondern von der Angussbüchse 12 auf die Kopfplatte 21 geleitet. Ein Futter 28 sichert diese Angussbüchse 12.

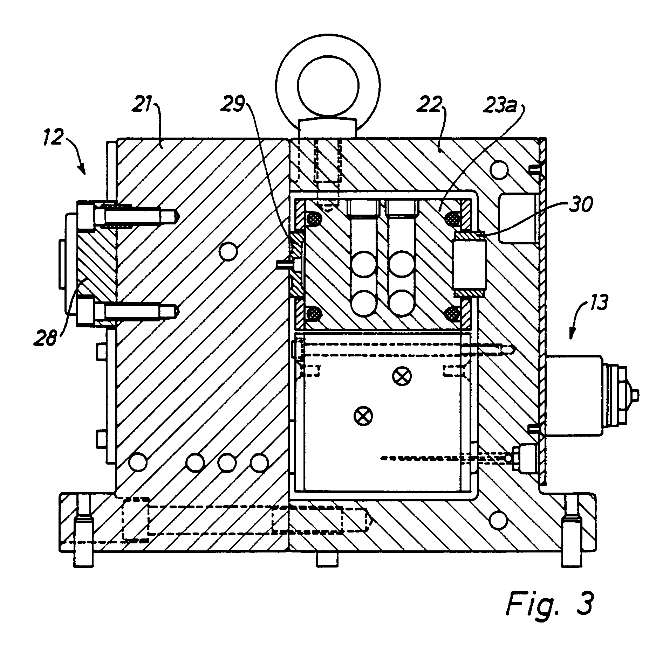

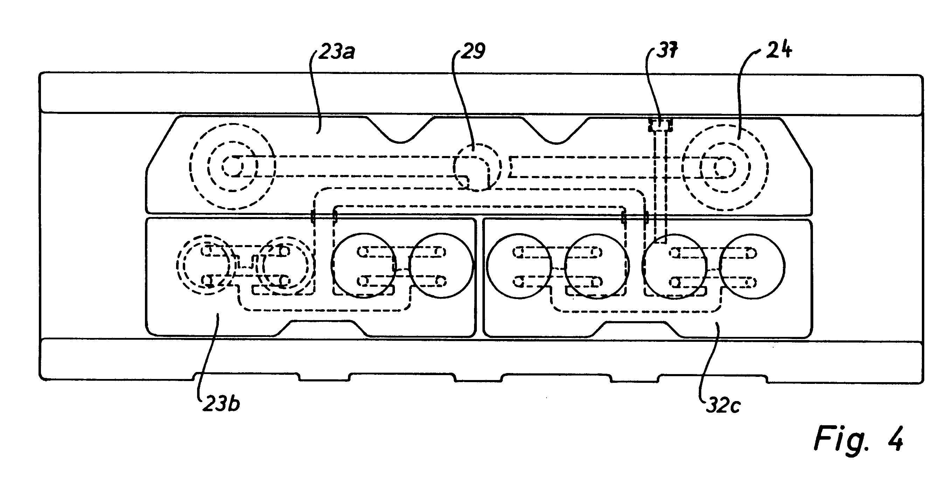

Aus den Figuren 3 und 4 wird ersichtlich, dass die spannungsfreie Wärmeausdehnung des Heissläufer-Blocks 23a-c wesentlich dadurch erreicht wird, dass der obere Teil 23a des Hotrunner-Blocks in seiner Mitte einerseits an der Kopfplatte 21 und andererseits an der Hotrunnerplatte 22 mit Hilfe einer Zentrierscheibe 29 und eines Zentrierrings 30 fest gelagert ist. Eine thermische Ausdehnung des oberen Teils 23a des Hotrunner-Blocks führt damit dazu, dass sich die Ansatzstutzen 24 (Figuren 2, 4) symmetrisch nach aussen verlagern. Eine genaue Justierung der Verbindungsstelle zwischen Extruder 3 und Ansatzbüchse 12 kann in einfacher Weise erfolgen. Durch die Trennung der unteren Teile 23b, c wird der durch den unterschiedlichen Aufbau des oberen 23a und der unteren Teile 23b, c erzeugten Wärmeausdehnungsdifferenz Rechnung getragen. Derart können sich die an der Kanalübergangsstelle befestigten unteren Teile 23b, c unabhängig voneinander ausdehnen.

Dies wird insbesondere auch dadurch erreicht, dass die unteren Teile 23b, c des Hotrunner-Blocks, wie in Figur 2 dargestellt, extruderseitig mit Anschlagstopfen 20 versehen sind und düsenseitig auf gleitenden Dichtungsstopfen 80 aufliegen. Diese Stopfen 20, 80 sind vorzugsweise im Bereich der Nadel-Verschluss-Anordnung 31 eingesetzt. So weist beispielsweise der Anschlagstopfen 20 eine Bohrung auf, durch welche die Nadel 32 der Nadel-Verschluss-Anordnung 31 durchgeführt ist, wobei diese Bohrung genügend gross ist, um bei der thermischen Ausdehnung des Hotrunner-Blocks diese Nadel 32 nicht zu blockieren. Demgegenüber ist der Dichtungsstopfen 80 in die in der Hotrunnerplatte 22 eingespannte Düse 13 eingesetzt. Bei Betriebstemperatur erlaubt diese Anordnung eine vorausberechenbare thermische Verschiebung der unteren Hotrunner-Blöcke 23b, c und führt gleichzeitig zu einer druckfesten Dichtung zwischen den Förderkanälen 14 und den Düsenkanälen 15.

Wie aus Figur 2 ersichtlich, erweist es sich als besonders vorteilhaft, eine Nadel-Verschluss-Anordnung 31 in einer als pneumatischer Zylinder wirkenden Aussparung in der Kopfplatte 21 zu logieren. Insbesondere besteht die Nadel-Verschluss-Anordnung 31 aus einem ersten, die Nadel 32 führenden Kolben 33, über welchem ein zweiter Kolben 34 beweglich eingesetzt ist. Ein hermetisch abschliessender Zylinderdeckel 35 schliesst diese Aussparung druckfest ab. Geeignet angeordnete Druckleitungen 41, 43 und 44 erlauben es, die einzelnen Kolben und damit die Nadel 32 in die gewünschte Stellung zu bringen.

In einer bevorzugten Ausführungsform weisen die einzelnen Druckleitungen verschieden hohe Drucke auf. So kann beispielsweise die äussere Druckleitung 44 mit 10 bar, die mittlere Druckleitung 43 mit 6 bar und die innere Druckleitung 41 mit 6 bar beaufschlagt werden. Durch geeignete Druckänderungen in den einzelnen Druckleitungen kann die Düsennadel 32 für die Regelung der Düsen-Austrittsöffnungen in erforderlicher Weise bewegt werden.

Es versteht sich, dass die beispielsweise aufgezeigte Werkzeugkonstruktion vom Fachmann in unterschiedlicher Weise und ohne erfinderisches Dazutun modifiziert werden kann. So kann beispielsweise die Anzahl der Gleit- oder Leitelemente den besonderen Dimensionen des Heissläufer-Blocks angepasst werden oder können besondere Materialien mit geeigneter Wärmekapazität oder Wärmeleitzahl gewählt werden. Insbesondere kann die Zahl der Düsen den Erfordernissen der Formteile angepasst werden oder können mehrere Führungskanäle für die Herstellung von mehrschichtigen Vorformlingen vorgesehen werden.

## Patentansprüche

1. Balanciertes Mehrfach-Heisskanal-Koinjektions-Werkzeug für eine Spritz-Blas-Maschine, welches Werkzeug (2) eine Kopfplatte (21), eine Heissläuferplatte (22) und einen Heissläufer-Block (23a-c) aufweist, sowie ein rohrförmiges Ansatzstück (24) zum Verbinden des Heissläufer-Blocks (23a-c) mit einem Extruder, wobei der Heissläufer-Block (23a-c) zur spannungsfreien Wärmeausdehnung zwischen der Kopfplatte (21) und der Heissläuferplatte (22) mit Mitteln (20, 25, 26, 80) gleitend abgestützt ist und lediglich in seiner Mitte durch Zentriermittel (29, 30) festgehalten ist, dadurch gekennzeichnet, dass das rohrförmige Ansatzstück (24) exzentrisch am Heissläufer-Block (23a-c) befestigt ist und dass Mittel (27) vorgesehen sind, um die Richtung der Wärmeausdehnung des Heissläufer-Blocks (23a-c) zu kontrollieren.

2. Werkzeug nach Anspruch 1, dadurch gekennzeichnet, dass die Zentriermittel (29, 30) eine an der Kopfplatte (21) befestigte Zentrierscheibe (29) und einen sowohl in der Heissläuferplatte (22) als auch im Heissläufer-Block (23a) lagernden Zentrierring (30) umfassen.

3. Werkzeug nach einem der Ansprüche 1 oder 2, dadurch gekennzeichnet, dass die Mittel, um den Heissläufer-Block (23a-c) gleitend abzustützen, seitlich angeordnete Gleitelemente, insbesondere Gleitringe (25) umfassen.

4. Werkzeug nach Anspruch 3, dadurch gekennzeichnet, dass die Gleitelemente in der Achse des rohrförmigen Ansatzstücks (24) liegen.

5. Werkzeug nach einem der Ansprüche 1 bis 4, dadurch gekennzeichnet, dass die Mittel (25, 27), um die Richtung der Wärmeausdehnung des Heissläufer-Blocks (23a-c) zu kontrollieren, mindestens zwei seitlich angeordnete Leitelemente, insbesondere in einer Nut laufende Stifte (27) umfassen.

6. Werkzeug nach Anspruch 4 oder 5, dadurch gekennzeichnet, dass die Leitelemente (27) mit den Gleitelementen (25) kombiniert sind.

7. Werkzeug nach einem der Ansprüche 1 bis 6, dadurch gekennzeichnet, dass das rohrförmige Ansatzstück (24) und der Heissläufer-Block (23a-c) fest miteinander verbunden sind und das Ansatzstück (24) auf der Kopfplatte (21) gleitend gelagert ist.

8. Werkzeug nach einem der Ansprüche 1 bis 7, dadurch gekennzeichnet, dass eine Angussbüchse (12) vorgesehen ist, die vorzugsweise mittels einer Radialdichtung mit dem rohrförmigen Ansatzstück (24) verbunden ist und auf der Kopfplatte (21) gleitend abgestützt ist.

9. Werkzeug nach einem der Ansprüche 1 bis 8, dadurch gekennzeichnet, dass gleitfähige Dichtungsstopfen (80) vorgesehen sind, welche die Förderkanäle (14) im Hotrunner-Block und die Düsenkanäle (15) in der Düse (13) bei Betriebstemperatur druckfest miteinander verbinden.

10. Werkzeug nach einem der Ansprüche 1 bis 9, dadurch gekennzeichnet, dass dieses gleitfähige Anschlagstopfen (20) aufweist.

11. Werkzeug nach einem der Ansprüche 1 bis 10, dadurch gekennzeichnet, dass dieses mit einer Nadel-Verschluss-Anordnung (31) versehen ist.

12. Werkzeug nach Anspruch 11, dadurch gekennzeichnet, dass die Nadel der Nadel-Verschluss-Anordnung (31) durch jeweils den Anschlagstopfen (20) und den Dichtungsstopfen (80) geführt ist.

## Claims

1. Balanced multiple hot runner coinjection tool for an injection and blow-molding machine, said tool (2) comprising a top plate (21), a hot runner plate (22) and a hot runner block (23a-c), as well as a tube shaped portion (24) for connecting the hot runner block with an extruder, whereby the hot runner block (23a-c) is slidingly supported by means (20, 25, 26, 80) between the top plate (21) and the hot runner plate (22) in order to allow a strain-free thermal expansion, and is secured only in its center by centering means (29, 30) characterized in that the tube shaped portion (24) is secured eccentrically to the hot runner block (23a-c) and that means (27) are provided to control the direction of thermal expansion of the hot runner block (23a-c).

2. Tool according to claim 1, characterized in that the centering means (29, 30) comprise a centering disk (29) being attached to the top plate (21), and a centering ring (30) resting both in the hot runner plate (22) and in the hot runner block (23a).

3. Tool according to claims 1 or 2, characterized in that the means to slidingly support the hot runner block (23a-c) comprise peripherally arranged displacement elements, in particular displacement rings (25).

4. Tool according to claim 3, characterized in that the displacement elements lie in the axis of the tube shaped portion (24).

5. Tool according to claims 1 to 4, characterized in that the means (25, 27) for controlling the thermal expansion direction of the hot runner block (23a-c) comprise at least two peripherally arranged guiding elements, in particular pins (27) lying in a groove.

6. Tool according to claims 4 or 5, characterized in that the guiding elements (27) are combined with the displacement elements (25).

7. Tool according to claims 1 to 6, characterized in that the tube shaped portion (24) and the hot runner block (23a-c) are firmly secured to each other and that said tube shaped portion (24) is slidingly borne on the top plate (21).

8. Tool according to claims 1 to 7, characterized in that a feed bush (12) is provided, which is preferably connected by means of a radial seal with the tube shaped portion (24) and is slidingly supported by the top plate (21).

9. Tool according to claims 1 to 8, characterized in that displaceable sealing plugs (80) are provided, which pressure tightly connect the conveying channels (14) in the hot runner block and the nozzle channels (15) in the nozzle (13) at operating temperature.

10. Tool according to claims 1 to 9, characterized in that displaceable abuttment plugs (20) are provided.

11. Tool according to claims 1 to 10, characterized in that a needle shut-off arrangement (31) is provided.

12. Tool according to claim 11, characterized in that the needle of the needle shut-off-arrangement (31) is guided through the abuttment plug (20) and the sealing plug (80).

## Revendications

1. Moule équilibré de co-injection à canaux chauffants multiples pour une machine d'injection par soufflage, le moule (2) comportant une plaque de tête (21) une plaque chauffante (22) et un bloc chauffant (23a-c), ainsi qu'un élément de raccordement tubulaire (24) servant à raccorder le bloc chauffant (23a-c) à une extrudeuse, le bloc chauffant (23a-c) étant supporté par glissement entre la plaque de tête (21) et la plaque chauffante (22) par des moyens (20, 25, 26, 80) pour permettre une dilatation thermique exempte de tension et n'étant retenu qu'au niveau de son centre par des moyens de centrage (29, 30), caractérisé en ce que l'élément de raccordement tubulaire (24) est fixé de façon excentrique sur le bloc chauffant (23a-c), des moyens (27) étant prévus pour contrôler la direction de la dilatation thermique du bloc chauffant (23a-c).

2. Moule selon la revendication 1, caractérisé en ce que les moyens de centrage (29, 30) englobent un disque de centrage (29) fixé sur la plaque de tête (21) ainsi qu'une bague de centrage (30) logée tant dans la plaque chauffante (22) que dans le bloc chauffant (23a).

3. Moule selon l'une des revendications 1 ou 2, caractérisé en ce que les moyens destinés à supporter par glissement le bloc chauffant (23a-c) comprennent des éléments de glissement à agencement latéral, en particulier des anneaux de glissement (25).

4. Moule selon la revendication 3, caractérisé en ce que les éléments de glissement se situent dans l'axe de l'élément de raccordement tubulaire (24).

5. Moule selon l'une des revendications 1 à 4, caractérisé en ce que les moyens (25, 27) servant à contrôler la direction de la dilatation thermique du bloc chauffant (23a-c) englobent au moins deux éléments de guidage à agencement latéral, en particulier des goupilles (27) se déplaçant dans une rainure.

6. Moule selon les revendications 4 ou 5, caractérisé en ce que les éléments de guidage (27) sont combinés avec les éléments de glissement (25).

7. Moule selon l'une des revendications 1 à 6, caractérisé en ce que l'élément de raccordement tubulaire (24) et le bloc chauffant (23a-c) sont reliés fermement, l'élément de raccordement (24) étant agencé par glissement sur la plaque de tête (21).

8. Moule selon une des revendications 1 à 7, caractérisé en ce qu'il comporte une busette (12), reliée de préférence par l'intermédiaire d'un joint radial à l'élément de raccordement tubulaire (24) et supporté par glissement sur la plaque de tête (21).

9. , Moule selon l'une des revendications 1 à 8, caractérisé en ce que qu'il comporte des bouchons d'étanchéité à glissement (80), assurant la liaison étanche à la pression des canaux de transport (14) dans le bloc chauffant et des canaux d'alimentation (15) dans la buse (13) en présence de la température de service.

10. Moule selon l'une des revendications 1 à 9, caractérisé en ce qu'il comporte des bouchons de butée à glissement (20).

11. Moule selon l'une des revendications 1 à 10, caractérisé en ce qu'il comporte un dispositif de fermeture à aiguille (31).

12. Moule selon la revendication 11, caractérisé en ce que l'aiguille du dispositif de fermeture à aiguille (31) est guidée par le bouchon de butée (20) et le bouchon d'étanchéité (80).
